# EUROPÄISCHE PATENTSCHRIFT

(11) **EP 2 736 913 B1**
(45) Veröffentlichungstag und Bekanntmachung des Hinweises auf die Patenterteilung: **26.08.2015**
(21) Anmeldenummer: 12740306.1
(22) Anmeldetag: 06.07.2012
(51) Int. Cl.: C07F 9/30, C07F 9/32, C07F 9/34, C07F 9/44, C07F 9/53, B01D 53/28, B01D 53/02, B01D 53/26

(54) **VERFAHREN ZUR HERSTELLUNG VON BIS(PERFLUORALKYL)PHOSPHINSÄUREANHYDRIDEN**
METHOD FOR PRODUCING BIS(PERFLUOROALKYL)PHOSPHINIC ACID ANHYDRIDES
PROCÉDÉ DE PRÉPARATION D'ANHYDRIDES D'ACIDE BIS(PERFLUOROALKYLE)PHOSPHINIQUE

(30) Priorität: 25.07.2011 DE 102011108324
(43) Veröffentlichungstag der Anmeldung: 04.06.2014
(73) Patentinhaber: Merck Patent GmbH, 64293 Darmstadt (DE)
(72) Erfinder: IGNATYEV, Nikolai (Mykola), 47058 Duisburg (DE); WIEBE, Waldemar, 50939 Koeln (DE); WILLNER, Helge, 45481 Muehlheim/Ruhr (DE)
(86) Internationale Anmeldenummer: PCT/EP2012/002843
(87) Internationale Veröffentlichungsnummer: WO 2013/013766

(56) Entgegenhaltungen:
- MAHMOOD T ET AL: "New perfluoroalkylphosphonic and bis(perfluoroalkyl)phosphinic acids and their precursors", INORGANIC CHEMISTRY, AMERICAN CHEMICAL SOCIETY, EASTON, US, Bd. 25, 1. Januar 1986 (1986-01-01), Seiten 3128-3131, XP002221561, ISSN: 0020-1669, DOI: 10.1021/IC00238A006 in der Anmeldung erwähnt

## Beschreibung

Die Erfindung betrifft ein Verfahren zur Herstellung von Bis(perfluoralkyl)phosphinsäureanhydriden durch Umsetzung einer Bis(perfluoralkyl)phosphinsäure mit Phosphorpentaoxid.

R.C. Dobbie, J. Chem. Soc. (A), 1971, 2894-2897 berichtet über die Synthese von Bis(trifluormethyl)phosphinsäureanhydrid durch Oxidation von P₂(CF₃)₄ (Tetrakistrifluormethyldiphosphin) mit 4 Äquivalenten NO in einem verschlossenen Behälter bei Raumtemperatur.

Anton B. Burg, Inorganic Chemistry, 1978, 17, 2322-2324 berichtet über die Synthese von Bis(trifluormethyl)phosphinsäureanhydrid durch Umsetzung von Bis(trifluoromethyl)phosphinigesäureanhydrid [(CF₃)₂POP(CF₃)₂] mit Bis(trifluormethyl)phosphinylchlorid.

T. Mahmood und J.M. Shreeve, Inorg. Chem. 1986, 25, 3128-3131 berichten über eine Synthese von Bis(pentafluorethyl)phosphinsäureanhydrid als nichtflüchtiges Produkt, welches bei der Reaktion im Reaktionsgefäß verbleibt, durch Umsetzung von Chlorobis(pentafluorethylphosphin) [(C₂F₅)₂PCl] mit einem Überschuss von NO₂ bei 25°C. Die NMR-Spektren in dem angegebenen Literaturzitat stimmen jedoch nicht mit den Spektren des Bis(pentafluorethyl)phosphinsäureanhydrids, einer destillierbaren Flüssigkeit, überein, welches nach dem erfindungsgemäßen Verfahren erhalten wird. Die Positionen der Signale im ¹⁹F und ³¹P NMR-Spektrum und deren Feinstruktur, die in T. Mahmood und J.M. Shreeve in Inorg. Chem. 1986, 25, 3128-3131 beschrieben sind, sind den entsprechenden Spektren der Bis(pentafluorethyl)phosphinsäure ähnlicher. Spektren der Bis(pentafluorethyl)phosphinsäure sind beispielsweise in Beispiel 3 beschrieben. Die CF₂-Gruppe der Bis(pentafluorethyl)phosphinsäure [(C₂F₅)₂P(O)OH] erzeugt im ¹⁹F NMR-Spektrum in deuteriertem Acetonitril ein einfaches Dublet bei -127.0 ppm mit einer Kopplungskonstante von ²J_{P,F} = 77 Hz. Die Position dieses Signals ist sehr ähnlich zu dem beschriebenen Signal von T. Mahmood und J.M. Shreeve, nämlich δCF₂ = -126.3 and ²J_{P,F} = 73 Hz in deuteriertem Dimethylsulfoxid.

Das ¹⁹F NMR-Spektrum des Bis(pentafluorethyl)phosphinsäureanhydrids, wie in Beispiel 1 vollständig angegeben, ist völlig verschieden. Die Fluoratome in den CF₂-Gruppen im Bis(pentafluorethyl)phosphinsäureanhydrid [(C₂F₅)₂P(O)OP(O)(C₂F₅)₂] sind spektroskopisch nicht gleich, sondern bilden ein CF_{A}F_{B}-System, welches zu zwei Doppeldublets bei -122.0 und -127.0 ppm führt (ein sogenanntes ABX-Spinsystem), mit den Kopplungskonstanten ²J_{P,F(A)}= 90 Hz und ²J_{P,F(B)} = 107 Hz. Die ³¹P NMR-Spektren des

Bis(pentafluorethyl)phosphinsäureanhydrids des Beispiels 1 im Vergleich zum Anhydrid, wie bei T. Mahmood und J.M. Shreeve beschrieben, sind ebenfalls unterschiedlich: Beispiel 1 beschreibt ein komplexes Multiplet, während das Literaturzitat ein einfaches Pentett angibt. Die Zugänglichkeit dieser Verbindung aus der Reatkion dieses Literaturzitats ist daher nicht gegeben und diese Verbindung ist daher immer noch neu.

Spektren des Bis(pentafluorethyl)phosphinsäureanhydrids, wie berichtet bei Mahmood et al:
¹⁹F: -81,4 s (CF3), -126,3 d (J_{CF2-P}) 73.24 Hz.
³¹P: -0.3. Pentett.,

Rajendra P. Singh und J. M. Shreeve, Inorg. Chem. 2000, 39, 1787-1789 beschreiben Anhydride der Formel (R_{F})₂P(O)OP(O)(R_{F})₂ mit R_{F} = C₆F₁₃, C₇F₁₅ und C₈F₁₇ als Zwischenprodukte bei der Herstellung der korrespondierenden Bis(perfluoralkyl)phosphinsäuren durch Oxidation von (R_{F})₂PI mit NO₂. Die als Zwischenprodukt angegebenen Anhydride werden jedoch nicht isoliert, nicht analysiert und es liegt keine Charakterisierung mit physikalisch-chemischen Methoden vor. Die Zugänglichkeit dieser Verbindungen aus der Reatkion dieses Literaturzitats ist daher ebenfalls nicht gegeben und diese Verbindungen sind daher immer noch als neu anzusehen.

Anhydride von Carbonsäuren und Alkylsulfonsäuren sind interessante Reagenzien für organische Synthesen. Bis(perfluoralkyl)phosphinsäuren und deren Derivate sind interessante Komponenten von protonenleitenden Membranen oder sie sind beispielsweise geeignet als Katalysatoren in der organischen Chemie. Sie sind weiterhin geeignet für die Synthese von fluorhaltigen Tensiden oder zur weiteren Umsetzung zu den entsprechenden Säurechloriden, die wiederum geeignet sind für die Synthese von neuen Materialien, beispielsweise von ionischen Flüssigkeiten.

Die bisher veröffentlichten Methoden zur Herstellung von Bis(perfluoralkyl)phosphinsäureanhydriden, wie zuvor beschrieben, führen nicht zu den gewünschten Produkten oder sind großtechnisch nicht anwendbar. Es ist daher wünschenswert eine wirtschaftlich und großtechnisch umsetzbare Synthese dieser Verbindungen zur Verfügung zu haben, damit diese interessante Klasse der Bis(pefluoralkyl)phosphinsäureanhydride und deren Anwendungen untersucht werden kann.

Die Aufgabe der Erfindung ist daher ein verbessertes Verfahren zur Herstellung von Bis(perfluoralkyl)phosphinsäureanhydriden zu entwickeln, das den Anforderungen einer großtechnischen wirtschaftlichen Synthese gerecht wird.

Überraschenderweise wurde gefunden, dass die Bis(perfluoralkyl)phosphinsäure mit Phosphorpentaoxid umgesetzt werden kann und daraus die gewünschten Anhydride isoliert werden können.

In K. Moedritzer, J. of the American Chemical Society, 1961, 83, 4381-4384 wird beschrieben, dass Phosphinsäureanhydride nicht durch Dehydrierung der korrespondierenden Phosphinsäure hergestellt werden können.

G.M. Kosolapoff, R.M. Watson, J. of the American Chemical Society, 1951, 73, 5466-5467 beschreiben ein typisches Verfahren zur Herstellung von nicht-fluorierten Dialkylphosphinsäureanhydriden basierend auf der Umsetzung von Dialkylphosphinylchloriden [(Alk)₂P(O)Cl] mit den korrespondierenden Dialkylphosphinsäuren oder deren Estern [(Alk)₂P(O)OH oder (Alk)₂P(O)OR].

M. Fimke und H.-J. Kleiner, Liebigs Ann. Chem., 1974, 741-750, beschreiben die Dehydrierung von nicht-fluorierten Dialkylphosphinsäuren oder deren Salze oder Ester mit Phosgen (COCl₂) als Dehydrierungsmittel zur Herstellung von nicht-fluorierten Dialkylphosphinsäureanhydriden.

Der Gegenstand der Erfindung ist daher ein Verfahren zur Herstellung von Bis(perfluoralkyl)phosphinsäureanhydriden durch Umsetzung einer Bis(perfluoralkyl)phosphinsäure mit Phosphorpentaoxid.

Unter Phosphorpentaoxid wird die chemische Verbindung P₂O₅ oder synonym P₄O₁₀ verstanden.

Die erfindungsgemäß erhaltenen Verbindungen sind flüchtig und können durch Destillation von der Reaktionsmischung getrennt und gegebenenfalls aufgereinigt werden.

Bevorzugt werden Bis(perfluoralkyl)phosphinsäureanhydride der Formel I hergestellt,
(CₓF₂ₓ₊₁)₂(O)POP(O)(CₓF₂ₓ₊₁)₂ I
wobei
x 1, 2, 3, 4, 5, 6, 7, 8, 9, 10, 11 oder 12 bedeutet.

Es handelt sich um symmetrische Säureanhydride.

Die Ausgangsverbindungen, d.h. die Bis(perfluoralkyl)phosphinsäure, insbesondere Bis(perfluoralkyl)phosphinsäuren der Formel II

(CₓF₂ₓ₊₁)₂P(O)OH II

wobei
x 1, 2, 3, 4, 5, 6, 7, 8, 9, 10, 11 oder 12 bedeutet, ist/sind kommerziell erhältlich oder nach gängigen Synthesemethoden herstellbar, beispielsweise nach den Methoden, wie in den Offenlegungsschriften WO 03/087110 oder WO 2010/012359 beschrieben.

Besonders bevorzugt werden Verbindungen der Formel I hergestellt, in denen x für 2, 3, 4 oder 5 steht, ganz besonders bevorzugt steht x für 2 oder 4.

Das Verfahren, wie zuvor beschrieben, findet bei Temperaturen von 20° bis 250°C statt, vorzugsweise bei Temperaturen von 60° bis 210°C. Die Reaktivität der entsprechenden Bis(perfluoralkyl)phosphinsäure ist hierbei zu berücksichtigen. Wie im experimentellen Teil besonders dargelegt, findet die Herstellung des Bis(nonafluorbutyl)phosphinsäureanhydrids bei 60°C in einem inerten Lösungsmitell (1,1,1,3,3-Pentafluorbutan) statt, wohingegen das Bis(pentafluorethyl)phosphinsäureanhydrid bei 210°C ohne Verwendung von Lösungsmitteln hergestellt wird. Die genaue Reaktionstemperatur liegt im Ermessen des Fachmanns, der auf dem Gebiet der organischen Synthese arbeitet.

Das Verfahren kann lösungsmittelfrei oder in Anwesenheit von Lösungsmitteln durchgeführt werden. Geeignete Lösungsmittel sind beispielsweise Fluoralkane, Chloralkane oder Fluor-chloralkane, insbesondere 1,1,1,3,3-Pentafluorbutan oder 1,1,2-Trichlortrifluorethan. Bevorzugt wird ohne Lösungsmittel oder im Lösungsmittel 1,1,1,3,3-Pentafluorbutan umgesetzt.

Die Umsetzung der Bis(perfluoralkyl)phosphinsäure mit Phosphorpentaoxid kann ohne Schutzgasatmosphäre durchgeführt werden. Vorzugsweise findet die Reaktion jedoch unter getrockneter Luft oder in einer Inertgasatmosphäre statt.

Die Bis(perfluoralkylphosphinsäure)anhydride, die nach dem erfindungsgemäßen Verfahren hergestellt werden können oder hergestellt werden, bevorzugt die Verbindungen der Formel I, wie zuvor beschrieben, wobei x 1, 2, 3, 4, 5, 6, 7, 8, 9, 10, 11 oder 12 bedeuten, eignen sich insbesondere als wasserentziehendes Mittel oder als Trockenmittel.

Weiterhin sind die Bis(perfluoralkyl)phosphinsäureanhydride, die nach dem erfindungsgemäßen Verfahren hergestellt werden können oder hergestellt werden, bevorzugt die Verbindungen der Formel I, wie zuvor beschrieben, wobei x 1, 2, 3, 4, 5, 6, 7, 8, 9, 10, 11 oder 12 bedeuten, ideale Ausgangsverbindungen zur Herstellung von anderen Derivaten der zugrunde liegenden Bis(perfluoralkyl)phosphinsäure oder von Salzen mit dem entsprechenden Bis(perfluoralkyl)phosphinat-Anion.

Bevorzugte Bis(perfluoralkyl)phosphinsäurederivate sind beispielsweise
- Bis(perfluoralkyl)phosphinsäurechloride, insbesondere der Formel III

   (CₓF₂ₓ₊₁)₂P(O)Cl III,

   wobei
   x 1, 2, 3, 4, 5, 6, 7, 8, 9, 10, 11 oder 12 bedeutet,
- Bis(perfluoralkyl)phosphinsäurebromide, insbesondere der Formel IV

   (CₓF₂ₓ₊₁)₂P(O)Br IV,

   wobei
   x 1, 2, 3, 4, 5, 6, 7, 8, 9, 10, 11 oder 12 bedeutet,
- Bis(perfluoralkyl)phosphinsäuretrialkylsilylether, insbesondere der Formel V

   (CₓF₂ₓ₋₁)₂P(O)OSi(Alkyl)₃ V,

   wobei
   x 1, 2, 3, 4, 5, 6, 7, 8, 9, 10, 11 oder 12 bedeutet und
   Alkyl eine geradkettige oder verzweigte Alkylgruppe mit 1 bis 4 C-Atomen bedeutet,
- N,N-Dialkyl-bis(perfluoralkyl)phosphinylamine oder -amide, insbesondere der Formel VI,

   (CₓF₂ₓ₊₁)₂P(O)N(R)₂ VI,

   wobei
   x 1, 2, 3, 4, 5, 6, 7, 8, 9, 10, 11 oder 12 bedeutet und
   R jeweils unabhängig voneinander H oder eine geradkettige oder verzweigte Alkylgrupe mit 1 bis 12 C-Atomen bedeutet,
- Bis(perfluoralkyl)phosphinylcyanide, insbesondere der Formel VII

   (CₓF₂ₓ₊₁)₂P(O)CN VII,

   wobei
   x 1, 2, 3, 4, 5, 6, 7, 8, 9, 10, 11 oder 12 bedeutet oder
- Bis(perfluoralkyl)phosphinyl-iso-thiocyanate, insbesondere der Formel VIII

   (CₓF₂ₓ₊₁)₂P(O)NCS VIII,

   wobei
   x 1, 2, 3, 4, 5, 6, 7, 8, 9, 10, 11 oder 12 bedeutet.

Die Reaktionsbedingungen dieser weiterführenden Derivatisierungen sind dem Fachmann hinlänglich bekannt. Ausführungsbeispiele werden bei den Beispielen beschrieben.

Eine geradkettige (oder synonym dazu lineare) oder verzweigte Alkylgruppe mit 1 bis 4 C-Atomen ist beispielsweise Methyl, Ethyl, n-Propyl, Isopropyl, n-Butyl, sec.-Butyl oder tert-Butyl. Eine lineare oder verzweigte Alkylgruppe mit 1 bis 12 C-Atomen umfasst die Ausführungsformen der linearen oder verzweigten Alkylgruppe mit 1 bis 4 C-Atomen und beispielsweise n-Pentyl, n-Hexyl, n-Heptyl, n-Octyl, Ethylhexyl, n-Nonyl, n-Decyl, n-Undecyl oder n-Dodecyl.

Bei der Derivatisierung entsteht als weiteres Produkt in der Regel neben den zuvor beschriebenen Derivaten, insbesondere den Verbindungen der Formel III bis VIII, ebenfalls die enstprechenden Bis(perfluoralkyl)phosphinate, wobei das Kation hier sowohl anorganisch als auch organisch sein kann.

Insbesondere entstehen bei der Derivatisierung Verbindungen der Formel IX

Kt [OP(O)(CₓF₂ₓ₊₁)₂] IX,

wobei
x 1, 2, 3, 4, 5, 6, 7, 8, 9, 10, 11 oder 12 bedeutet
und Kt ein anorganisches oder organisches Kation ist.

Das organische Kation für Kt wird beispielsweise ausgewählt aus Ammoniumkationen, Sulfoniumkationen, Phosphoniumkationen, Uroniumkationen, Thiouroniumkationen, Guanidiniumkationen oder heterozyklischen Kationen.

Anorganische Kationen für Kt werden beispielsweise ausgewählt aus Metallkation der Gruppen 1 bis 12 des Periodensystems, ausgewählt aus Alkalimetallkationen, Ag⁺, Mg²⁺, Cu⁺, Cu²⁺, Zn²⁺,Ca²⁺, Y⁺³, Yb⁺³, La⁺³, Sc⁺³, Ce⁺³, Nd⁺³, Tb⁺³, Sm⁺³ oder komplexe (Liganden enthaltende) Metallkationen, die Seltenerd-, Übergangs- oder Edelmetalle wie Rhodium, Ruthenium, Iridium, Palladium, Platin, Osmium, Kobalt, Nickel, Eisen, Chrom, Molybdän, Wolfram, Vanadium, Titan, Zirconium, Hafnium, Thorium, Uran, Gold enthalten.

Die folgenden Ausführungsbeispiele sollen die Erfindung erläutern, ohne sie zu begrenzen. Die Erfindung ist im gesamten beanspruchten Bereich entsprechend ausführbar. Ausgehend von den Beispielen lassen sich auch mögliche Varianten ableiten. Insbesondere sind die Merkmale und Bedingungen der in den Beispielen beschriebenen Reaktionen auch auf andere, nicht im Detail aufgeführte, aber unter den Schutzbereich der Ansprüche fallende Reaktionen anwendbar.

### Beispiele:

Die erhaltenen Stoffe werden Mittels Raman-Spektroskopie, Elementaranalyse und NMR- Spektroskopie charakterisiert. Die NMR-Spektren werden an Lösungen in deuterierten Aceton-D₆ an einem Bruker Avance III Spektrometer mit Deuterium Lock gemessen. Die Messfrequenzen der verschiedenen Kerne sind: ¹H: 400,17 MHz, ¹⁹F: 376,54 MHz, ¹¹B: 128,39 MHz , ³¹P: 161,99 MHz und ¹³C: 100,61 MHz. Die Referenzierung erfolgt mit externer Referenz: TMS für ¹H und ¹³C Spektren; CCl₃F -für ¹⁹F und BF₃·Et₂O - für ¹¹B Spektren.

### Beispiel 1: Bis(pentafluorethyl)phosphinsäureanhydrid

16,8 g (118 mmol) Phosphorpentaoxid, P₂O₅, werden mit 8,8 g (29,1 mmol) Bis(pentafluorethyl)phosphinsäure, (C₂F₅)₂P(O)OH, versetzt und 6 Stunden unter Rückfluss bei 210 °C (Temperatur in Ölbad) erhitzt. Anschließend wird eine klare farblose Flüssigkeit im verminderten Vakuum (P = 100 mbar) abdestilliert. Siedepunkt: 78 °C (100 mbar). Die Ausbeute von Bis(pentafluorethyl)phosphinsäureanhydrid, (C₂F₅)₂(O)POP(O)(C₂F₅)₂, ist 7,2 g (84 %) bezogen auf die eingesetzte Bis(pentafluorethyl)phosphinsäure.

NMR-Daten: externer Lock: Aceton-D₆; Referenzsubstanz: für ¹H und ¹³C Spektren - TMS, für ¹⁹F Spektren - CCl₃F und für ³¹P Spektren - 85 % H₃PO₄ in D₂O):
³¹P NMR Spektrum, δ, ppm: 3.2 m.
¹⁹F NMR Spertrum, δ, ppm: -83,2 s (12F, 4CF₃); -122,0 d,d (4F_{A}, CF₂),
²*J*_{P,F(A)} = 90 Hz, ²*J*_{F(A)},_{F(B)} = 340 Hz; -127,0 d,d (4F_{B}, CF₂), ²*J*_{P,F(B)} = 107 Hz,
²*J*_{FA,FB} = 340 Hz.
¹³C NMR Spektrum, δ, ppm: 111,3 t,d,q (4C, 4CF₂), ¹*J*_{F,C} = 286 Hz, ¹*J*_{P,C} = 150 Hz, ²*J*_{F,C} = 43 Hz; 117,9 q,t,d (4C, 4CF₃), ¹*J*_{F,C}= 286 Hz, ²*J*_{F,C} = 30 Hz, ²*J*_{P,C} = 23 Hz.

Raman Spektrum für (C₂F₅)₂P(O)OP(O)(C₂F₅)₂, *ṽ*, cm⁻¹ : 1356 s, 1224 m, 1166 m, 759 vs, 700 m, 638 s, 597, 541, 370 m, 280 s, 260 s, 253 s, 151 s. IR_{(ATR)} für (C₂F₅)₂P(O)OP(O)(C₂F₅)₂. *ṽ*, cm⁻¹ : 1354 w, 1339 w, 1305 s, 1219 vs, 1148 vs, 1001 s, 932 s, 760 m, 753 m, 628 m, 598 m, 567 m, 507 s, 468 w, 415 w.

### Beispiel 2: Bis(nonafluorbutyl)phosphinsäureanhydrid

7,0 g (14,0 mmol) Bis(perfluorbutyl)phosphinsäure, (C₄F₉)₂P(O)OH, werden in 25 ml 1,1,1,3,3-Pentafluorbutan gelöst, mit 7,9 g (55,7 mmol) Phosphorpentaoxid, P₂O₅, versetzt und für 4 Tage zum Rückfluss bei 60 °C erhitzt. Nach fraktionierter Destillation werden 3,3 g

Bis(perfluorbutyl)phosphinsäureanhydrid als eine klare farblose Flüssigkeit erhalten. Dies entspricht einer Ausbeute von 48 % bezogen auf die eingesetzte Bis(nonafluorbutyl)phosphinsäure.

Siedepunkt: 77 °C (0.6 mbar).

NMR-Daten: externer Lock: D₂O; Referenzsubstanz: für ¹H und ¹³C Spektren - TMS, für ¹⁹F Spektren - CCl₃F und für ³¹P Spektren - 85 % H₃PO₄ in D₂O):
³¹P NMR Spektrum, δ, ppm: 2.4 m.
¹⁹F NMR Spertrum, δ, ppm: -83,3 s (12F, 4CF₃); -115,8 d,d (4F_{A}, CF₂)
²*J*_{P,F(A)} = 88 Hz, ²*J*_{F(A),F(B)} = 337 Hz; -119,7 d,d (4F_{B}, CF₂), ²*J*_{P,F(B)} = 107 Hz; -120,6 m (8F, 4CF₂); -127,6 s (8F, 4CF₂).

### Beispiel 3: Hydrolyse von Bis(pentafluorethyl)phosphinsäureanhydrid

(C₂F₅)₂(O)POP(O)(C₂F₅)₂ + H₂O → 2 (C₂F₅)₂P(O)OH

5,90 g (10,0 mmol) Bis(pentafluorethyl)phosphinsäureanhydrid, (C₂F₅)₂(O)POP(O)(C₂F₅)₂, werden bei 0 °C unter intensivem Rühren mit 0,19 g (10,5 mmol) Wasser versetzt. Es werden 6,09 g einer klaren farblosen Flüssigkeit erhalten. Die Ausbeute von Bis(pentafluorethyl)phosphinsäure ist quantitativ.
NMR-Daten (Lösungsmittel/Lock: CD₃CN; Referenzsubstanz: ¹⁹F CCl₃F, ³¹P 85 % H₃PO₄):
¹⁹F NMR Spektrum, δ, ppm: -82.1 s (6F, 2CF₃); -127,0 d (4F, 2CF₂), ²*J*_{P,F} = 77 Hz.
³¹P NMR Spektrum, δ, ppm: -0,1 quin, ²*J*_{P,F} = 76 Hz.

### Beispiel 4: Herstellung von Bis(pentafluorethyl)phosphinsäurechlorid

### A:

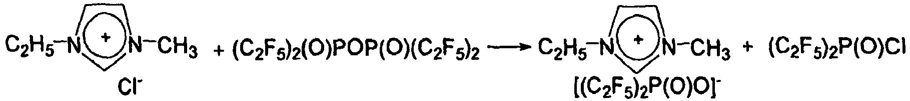

2,5 g (12,3 mmol) 1-Butyl-3-methylimidazoliumchlorid, EMIM Cl, werden mit 6,1 g (10,4 mmol) Bis(pentafluorethyl)phosphinsäureanhydrid, (C₂F₅)₂(O)POP(O)(C₂F₅)₂, versetzt und 15 Minuten bei Raumtemperatur gerührt. Nach anschließender Destillation (Siedepunkt: 86 °C) werden 2,9 g Bis(pentafluorethyl)phosphinsäurechlorid, (C₂F₅)₂P(O)Cl, erhalten, was einer Ausbeute von 88 % entspricht.

Bis(pentafluorethyl)phosphinsäurechlorid:
³¹P NMR Spektrum (Lösungsmittel: CD₃CN; Referenz Substanz: 85 % H₃PO₄), δ, ppm: 21,6 t,t ; ²*J*_{P,F} = 95 Hz, ²*J*_{P,F} = 98 Hz;
¹⁹F NMR Spektrum (Lösungsmittel: CD₃CN; Referenz Substanz: CCl₃F),
δ, ppm: -79,8 s (6F, 2CF₃); -118,2 d,d (2F_{A}, CF₂), ²*J*_{P,F(A)} = 92 Hz, ²*J*_{F(A)F(B)} = 326 Hz; -122,4 d,d (2F_{B}, CF₂), ²*J*_{P,F(B)} = 100 Hz, ²*J*_{F(A),F(B)} = 325 Hz.

### B:

[(CH₃)₄N]Cl + (C₂F₅)₂(O)POP(O)(C₂F₅)₂ → [(CH₃)₄)N][(C₂F₅)₂P(O)O] + (C₂F₅)₂P(O)Cl

1,98 g (18,1 mmol) Tetramethylammoniumchlorid werden mit 11,1 g (18,9 mmol) Bis(pentafluorethyl)phosphinsäureanhydrid, (C₂F₅)₂(O)POP(O)(C₂F₅)₂, versetzt. Das Reaktionsgemisch wird bei 190 °C (Temperatur in Ölbad) unter Rückfluss 2 Stunden gerührt. Danach wird 5,73 g gebildetes Bis(pentafluorethyl)phosphinsäurechlorid, (C₂F₅)₂P(O)Cl, abkondensiert, was einer Ausbeute von 99 % entspricht.

### Beispiel 5: Herstellung von Bis(pentafluorethyl)phosphinsäurebromid

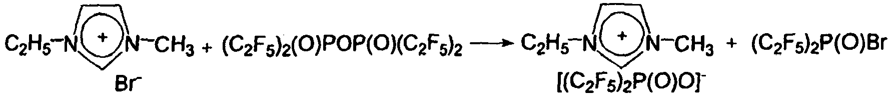

3,2 g (16,7 mmol) 1-Ethyl-3-methylimidazolium-bromid werden mit 10,2 g (17,4 mmol) Bis(pentafluorethyl)phosphinsäureanhydrid, (C₂F₅)₂(O)POP(O)(C₂F₅)₂, versetzt und 10 Minuten bei Raumtemperatur gerührt. Anschließend wird zur Vervollständigung der Reaktion für 5 Minuten zum Rückfluss erhitzt. Nach anschließender Destillation (Siedepunkt: 97 °C) werden 5,3 g Bis(pentafluorethyl)phosphinsäurebromid, (C₂F₅)₂P(O)Br, erhalten, was einer Ausbeute von 87 % entspricht.

NMR-Daten von Bis(pentafluorethyl)phosphinsäurebromid (externer Lock: D₂O; Referenzsubstanz für ¹⁹F NMR Spektrum - CCl₃F, für ³¹P NMR Spektren - 85 % H₃PO₄):
³¹P NMR Spektrum, δ, ppm: 15,2 quin ; ²*J*_{P,F} = 94 Hz.
¹⁹F NMR Spektrum, δ, ppm: -80,6 s (6F, 2CF₃); -117,4 d,d (2F, CF₂), ²*J*_{P,F(A)} = 93 Hz, ²*J*_{F(A),F(B)} = 322 Hz; -122,8 d,d (2F_{B}, CF₂), ²*J*_{P,F(B)} = 96 Hz, ²*J*_{F(A),F(B)} = 322 Hz.

### Beispiel 6: Herstellung von

### Bis(pentafluorethyl)phosphinsäuretrimethylsilylether

### A:

(CH₃)₃SiCl + (C₂F₅)₂(O)POP(O)(C₂F₅)₂ → (C₂F₅)₂P(O)OSi(CH₃)₃ + (C₂F₅)₂P(O)Cl

4,72 g (8 mmol) Bis(pentafluorethyl)phosphinsäureanhydrid, (C₂F₅)(O)POP(O)(C₂F₅)₂, werden bei Raumtemperatur mit 4,91 g (45 mmol) Trimethylchlorsilan versetzt, 10 min gerührt und anschließend fraktioniert destilliert. Es werden 2,13 g Bis(pentafluorethyl)phosphinsäure-chlorid und 2,81 g Bis(pentafluorethyl)phosphinsäure-trimethylsilylether erhalten. Dies entspricht einer Ausbeute von 83 bzw. 93 %. Bis(peentafluorethyl)phosphinsäuretrimethylsilylether:
³¹P NMR Spektrum (Lösungsmittel: CD₃CN; Referenz Substanz: 85 % H₃PO₄), δ, ppm: -2,7 br.m;
¹⁹F NMR Spektrum (Lösungsmittel: CD₃CN; Referenz Substanz: CCl₃F),
δ, ppm: -81,1 br. s (6F, 2CF₃); -125,4 br.m (4F, 2CF₂)
¹H NMR Spektrum (Lösungsmittel: CD₃CN; Referenz Substanz: TMS),
δ, ppm: 0.45 br.s (9H, 3CH₃).
B:

   (CH₃)₃SiOSi(CH₃)₃+ (C₂F₅)₂(O)POP(O)(C₂F₅)₂ → 2 (C₂F₅)₂P(O)OSi(CH₃)₃

14,4 g (24,6 mmol) Bis(pentafluorethyl)phosphinsäureanhydrid, (C₂F₅)₂(O)POP(O)(C₂F₅)₂, werden mit 7,7 g (47,4 mmol) Hexamethyldisiloxan, (CH₃)₃SiOSi(CH₃)₃, versetzt und 20 Minuten bei Raumtemperatur gerührt. Nach fraktionierter Destillation unter Vakuum (P = 8 mbar) werden 15,0 g Bis(pentafluorethyl)phosphinsäure-trimethylsilylether erhalten, was einer Ausbeute von 81 % entspricht. Siedepunkt: 58 °C (8 mbar).

### Beispiel 7: Herstellung von N,N-Dibutyl-bis(pentafluorethyl)phosphinylamid

1,21 g (2,1 mmol) Bis(pentafluorethyl)phosphinsäureanhydrid, (C₂F₅)₂(O)POP(O)(C₂F₅)₂, werden bei 0°C langsam mit 0,58 g (4,5 mmol) Dibutylamin, (C₄H₉)₂NH, versetzt und 15 Minuten gerührt. Nach anschließender Vakuum-Destillation werden 0,65 g *N,N*-Dibutyl-bis(pentafluoroethyl)phosphinylamide, (C₂F₅)₂P(O)N(C₄H₉)₂ erhalten, was einer Ausbeute von 76% entspricht.

³¹P NMR Spektrum (Lösungsmittel: CD₃CN; Referenz Substanz: 85 % H₃PO₄), δ, ppm: 13,0 quin,quin; ²*J*_{P,F} = 76 Hz, ³*J*_{P,H} = 11 Hz. ¹⁹F NMR Spektrum (Lösungsmittel: CD₃CN; Referenz Substanz: CCl₃F), δ, ppm: -81,4 s (6F, 2CF₃); -122,3 d (4F, 2CF₂), ²*J*_{P,F} = 75 Hz. ¹H NMR Spektrum (Lösungsmittel: CD₃CN; Referenz Substanz: TMS), δ, ppm: 0,93 t (6H, 2CH₃), ³*J*_{H,H} = 7 Hz; 1,30 d,q (4H, 2CH₂), ³*J*_{H,H} = 7 Hz; 1,59 m (4H, 2CH₂); 3,21 m (4H, 2CH₂).

### Beispiel 8: Herstellung von Bis(pentafluorethyl)phosphinylcyanid

### A:

(C₂F₅)₂(O)POP(O)(C₂F₅)₂ + KCN → (C₂F₅)₂P(O)CN + (C₂F₅)₂P(O)OK

0,78 g (12,0 mmol) fein gemörserte Kaliumcyanid werden in 24,4 g Sulfolan vorgelegt und bei 90 °C über eine Stunde im Vakuum gerührt und von flüchtigen Bestandteilen befreit. Nach Abkühlen des Reaktionsgemisches auf 40 °C werden 6,68 g (11,4 mmol)
Bis(pentafluorethyl)phosphinsäureanhydrid, (C₂F₅)₂(O)POP(O)(C₂F₅)₂, zugegeben, auf 55 °C erwärmt und weitere 3,5 Stunden gerührt.
Anschließend werden 3,15 g eines Gemisches bestehend aus Bis(pentafluorethyl)phosphinsäureanhydrid und
Bis(pentafluorethyl)phosphinsäurecyanid, (C₂F₅)₂P(O)CN, im molaren Verhältnis 1:9 abkondensiert. Nach einer fraktionierten Destillation dieses Gemisches werden 2,1 g Bis(pentafluorethyl)phosphinsäurecyanid mit
einem Siedepunkt von 72 °C erhalten. Dies entspricht einer Ausbeute von 59 % (bezogen auf das Anhydrid).

NMR-Daten von Bis(pentafluorethyl)phosphinsäure-cyanid (externer Lock: D₂O; Referenzsubstanz für ¹⁹F NMR Spektrum - CCl₃F, für ³¹P NMR Spektrum - 85 % H₃PO₄):
³¹P NMR Spektrum, δ, ppm: -13,9 t,t ; ²*J*_{P,F} = 90 Hz, ²*J*_{P,F} = 101 Hz.
¹⁹F NMR Spektrum, δ, ppm: -81,0 s (6F, 2CF₃); -119,1 d,d (2F, CF₂), *²J*_{P,F(A)} = 90 Hz, ²*J*_{F(A),F(B)} = 333 Hz; -125,6 d,d (2F_{B}, CF₂), ²*J*_{P,F(B)} = 101 Hz, ²*J*_{F(A),F(B)} = 333 Hz.
Raman Spektrum für (C₂F₅)₂P(O)CN, *v*, cm⁻¹: 2204 vs, 1337 s, 1300 s, 1226 m, 1133 m, 995 w, 757 vs, 672 w, 634 m, 592 w, 542 w, 468 w, 369 m, 328 m, 281 s, 257 s, 198 w, 144 s, 109 s.
IR _{(ATR)} für (C₂F₅)₂P(O)CN, *ṽ*, cm⁻¹: 2202 s, 1354 w, 1295 vs, 1218 vs, 1143 vs, 993 s, 758 s, 713 m, 674 s, 564 s, 506 s, 490 s, 423w.

### B:

0,97 g (14,9 mmol) fein gemörsertes Kaliumcyanid werden in 19,4 g Sulfolan vorgelegt und bei 60 °C über Nacht im Vakuum gerührt und von flüchtigen Bestandteilen befreit. Nach Abkühlen des Reaktionsgemisches auf 30 °C werden 12,43 g (21,2 mmol) Bis(pentafluorethyl)phosphinsäureanhydrid, (C₂F₅)₂(O)POP(O)(C₂F₅)₂, zugegeben und 24 Stunden bei dieser Temperatur gerührt. Anschließend werden die flüchtigen Bestandteile im Vakuum in einen auf -196 °C gekühlten Kolben kondensiert. 7,7 g des abkondensierten Gemisches, das aus Bis(pentafluorethyl)phosphinsäureanhydrid und Bis(pentafluorethyl)phosphin-säure-cyanid im molaren Verhältnis 2:3 besteht, werden auf -40 °C erwärmt und in ein auf -196 °C gekühltes Vorratsgefäß 3,4 g Bis(pentafluorethyl)phosphinsäurecyanid, (C₂F₅)₂P(O)CN im Vakuum überkondensiert. Dies entspricht einer Ausbeute von 73 % (bezogen auf das eingesetzte Kaliumcyanid).

### Beispiel 9: Herstellung von Bis(pentafluorethyl)phosphinyl-iso-thiocyanat

(C₂F₅)₂(O)POP(O)(C₂F₅)₂ + KSCN → (C₂F₅)₂P(O)NCS + (C₂F₅)₂P(O)OK

1,02 g (10,5 mmol) fein gemörsertes Kaliumthiocyanat, KSCN werden in 19,6 g Sulfolan vorgelegt, gerührt und bei 40 °C über Nacht im Vakuum von flüchtigen Bestandteilen befreit. Nach Abkühlen der Lösung auf 40 °C werden 6,38 g (11,4 mmol) Bis(pentafluorethyl)phosphinsäureanhydrid, (C₂F₅)₂(O)POP(O)(C₂F₅)₂, zugegeben und bei 70 °C eine Stunde gerührt. Nach Abkondensieren flüchtiger Komponenten in einen auf -196 °C gekühlten Kolben und anschließender fraktionierten Destillation werden 3,39 g einer klaren farblosen Flüssigkeit - Bis(pentafluorethyl)phosphinyl-*iso*-thiocyanat - mit einem Siedepunkt von 120 °C erhalten. Dies entspricht einer Ausbeute von 94 % (bezogen auf das eingesetzte Anhydrid).

NMR-Daten von Bis(pentafluorethyl)phosphinsäure-cyanid (externer Lock: D₂O; Referenzsubstanz für ¹⁹F NMR Spektrum - CCl₃F, für ³¹P NMR Spektrum - 85 % H₃PO₄):
³¹P NMR Spektrum, δ, ppm: -12,2 t,t ; ²*J*_{P,F} = 99 Hz, ²*J*_{P,F} = 84 Hz.
¹⁹F NMR Spektrum, δ, ppm: -81,7 s (6F, 2CF₃); -122,1 d,d (2F, CF₂), ²*J*_{P,FA} = 85 Hz, ²*J*_{FA,FB} = 334 Hz; -126,0 d,d (2F_{B}, CF₂), ²*J*_{P,FB} = 100 Hz, ²*J*_{FA,FB} = 332 Hz.
Raman Spektrum für (C₂F₅)₂P(O)NCS, *ṽ*, cm⁻¹ : 1971 vw, 1332 s, 1303 s, 1227 m, 1156 m, 1088 m, 983 w, 755vs, 655 w, 634 m, 541 w, 442 w, 414 s, 366 m, 330 m, 265 s, 163 m, 144 m.
IR _{(ATR)} für (C₂F₅)₂P(O)NCS, *ṽ*, cm⁻¹ : 1946 vs, 1294 s, 1217 vs, 1148 vs, 995 m, 928 m, 758 m,. 622 w, 596 w, 562 m, 499 s.

## Patentansprüche

1. Verfahren zur Herstellung von Bis(perfluoralkyl)phosphinsäureanhydriden durch Umsetzung einer Bis(perfluoralkyl)phosphinsäure mit Phosphorpentaoxid.

2. Verfahren nach Anspruch 1, **dadurch gekennzeichnet, dass** die Bis(perfluoralkyl)phosphinsäure der Formel II entspricht
(CₓF₂ₓ₊₁)₂P(O)OH II,
wobei
x 1, 2, 3, 4, 5, 6, 7, 8, 9, 10, 11 oder 12 bedeutet.

3. Verfahren nach Anspruch 1, **dadurch gekennzeichnet, dass** Bis(perfluoraklyl)phosphinsäureanhydride der Formel I hergestellt werden,
(CₓF₂ₓ₊₁)₂(O)POP(O)(CₓF₂ₓ₊₁)₂ I
wobei
x 1, 2, 3, 4, 5, 6, 7, 8, 9, 10, 11 oder 12 bedeutet.

4. Verfahren nach Anspruch 1, 2 oder 3, **dadurch gekennzeichnet, dass** die Reaktion bei Temperaturen von 20° bis 250°C stattfindet.

## Claims

1. Process for the preparation of bis(perfluoroalkyl)phosphinic acid anhydrides by reaction of a bis(perfluoroalkyl)phosphinic acid with phosphorus pentoxide.

2. Process according to Claim 1, **characterised in that** the bis(perfluoro-alkyl)phosphinic acid conforms to the formula II
(CₓF₂ₓ₊₁)₂P(O)OH II,
where
x denotes 1, 2, 3, 4, 5, 6, 7, 8, 9, 10, 11 or 12.

3. Process according to Claim 1, **characterised in that** bis(perfluoroalkyl)-phosphinic acid anhydrides of the formula I,
(CₓF₂ₓ₊₁)₂(O)POP(O)(CₓF₂ₓ₊₁)₂ I
where
x denotes 1, 2, 3, 4, 5, 6, 7, 8, 9, 10, 11 or 12,
are prepared.

4. Process according to Claim 1, 2 or 3, **characterised in that** the reaction is carried out at temperatures of 20° to 250°C.

## Revendications

1. Procédé de préparation d'anhydrides d'acide bis(perfluoroalkyl)phos-phinique, par la réaction d'un acide bis(perfluoroalkyl)phosphinique avec du pentoxyde de phosphore.

2. Procédé selon la revendication 1, **caractérisé en ce que** l'acide bis-(perfluoroalkyl)phosphinique répond à la formule II
(CₓF₂ₓ₊₁)₂P(O)OH II,
dans laquelle
x désigne 1, 2, 3, 4, 5, 6, 7, 8, 9, 10, 11 ou 12.

3. Procédé selon la revendication 1, **caractérisé en ce que** les anhydrides d'acide bis(perfluoroalkyl)phosphinique de formule I,
(CₓF₂ₓ₊₁)₂(O)POP(O)(CₓF₂ₓ₊₁)₂ I
dans laquelle
x désigne 1, 2, 3, 4, 5, 6, 7, 8, 9, 10, 11 ou 12,
sont préparés.

4. Procédé selon la revendication 1, 2 ou 3, **caractérisé en ce que** la réaction est effectuée à des températures allant de 20° à 250°C.
